# EUROPÄISCHE PATENTANMELDUNG

(11) **EP 1 939 023 A2**
(43) Veröffentlichungstag der Anmeldung: **02.07.2008**
(21) Anmeldenummer: 08007251.5
(22) Anmeldetag: 07.07.2005
(51) Int. Cl.: B60J 5/10

(54) **Mehrteilige Heckklappe für ein Kraftfahrzeug**

(30) Priorität: 07.07.2004 DE 102004032750
(62) Teilanmeldung aus: 05014761.0
(71) Anmelder: GM Global Technology Operations, Inc., Detroit MI 48265-3 (US)
(72) Erfinder: Blobel, Andreas, 65468 Trebur-Geinsheim (DE); Baccelli, Gian Luca, 65232 Taunusstein-Orlen (DE)
(74) Vertreter: Strauss, Peter

(57) **Zusammenfassung**

Die vorstehend diskutierte Erfindung schlägt erstmals eine Heckklappe (1) für ein Kraftfahrzeug mit einem an der Kraftfahrzeugstruktur anlenkbaren Heckklappenrahmen (3) sowie einem im oder am Heckklappenrahmen (3) gelagerten Heckklappenelement (23) vor. Das Heckklappenelement (23) weist einen zumindest abschnittsweise näherungsweise aufrecht orientierten, zur unteren Ladekante (85) benachbarten Heckklappenabschnitt (24) der Kraftfahrzeugheckklappe auf, wobei das Heckklappenelement (23) von wenigstens einem Heckklappenrahmenabschnitt (7,9,11,13,17), vorzugsweise im Wesentlichen in aufrechter Richtung verschwenkbar gehalten ist.
Erfindungsgemäß weist die Heckklappe (1) einen Antrieb zum Öffnen und Schließen auf.

## Beschreibung

Die vorliegende Erfindung ist eine Teilanmeldung zur EP 05014761.0 und betrifft eine Heckklappe für ein Kraftfahrzeug mit einem an der Kraftfahrzeugstruktur anlenkbaren Heckklappenrahmen sowie einem daran gelagerten Heckklappenelement, nach dem Oberbegriff des Anspruchs 1.

Aus der Praxis sind eine Mehrzahl von unterschiedlichen Kraftfahrzeugmodellen, wie beispielsweise Fließheckfahrzeuge, Stufenheckfahrzeuge, Schräghecklimousinen, Großraumlimousinen, Kombis, oder dergleichen Kraftfahrzeugtypen bekannt geworden. Die meisten dieser Kraftfahrzeuge verfügen über eine Heckklappe, die nach dem Öffnen den Zugang zum im Kraftfahrzeug befindlichen Laderaum frei gibt, wobei der Laderaum häufig gleichbedeutend ist mit dem Kofferraum plus gegebenenfalls beispielsweise für lange Ladegüter mit nutzbarem Ladevolumen im Bereich einer umgeklappten Rücksitzbank.

Die Laderaumöffnung entspricht dabei im Wesentlichen der Öffnung, die durch die beispielsweise nach oben aufschwenkende Heckklappe frei gegeben wird. Derlei Heckklappen sind üblicherweise an der Kraftfahrzeugstruktur, beispielsweise an der oberen hinteren, zwischen den beiden C-Säulen angeordneten Dach-Querstrebe oder an der unterhalb der Heckscheiben angeordneten Querstrebe angelenkt. Zudem weisen übliche Heckklappen häufig einen beispielsweise aus Prägeblechen geformten Heckklappenrahmen auf.

Am Heckklappenrahmen wurde zunehmend gerade bei jüngeren Modellen von Kombilimousinen ein im Heckklappenrahmen gelagertes Heckklappenelement als Heckscheibe ausgebildet, die zudem oftmals separat zur Heckklappe geöffnet werden kann. Damit soll ein zusätzlicher, gleichwohl kleinerer Zugang zum Laderaum frei gegeben werden können, um beispielsweise Kleidungsstücke oder dergleichen leichte Gegenstände zu oberst auf die bereits im Kofferraum befindlichen Gepäckstücke auflegen zu können, ohne dabei die Heckklappe als solche nochmals öffnen zu müssen.

Ferner sind aus der Praxis die sogenannten Pickup's bekannt, bei denen die Bordwand der Ladefläche, welche den in aller Regel nach oben offenen Laderaum auf der Heckpritsche umgibt, seitlich am Rand und/oder im hinteren heckseitigen Bereich nach unten weggeklappt werden kann, wie man dies beispielsweise von Lastkraftwagen kennt.

Bei den herkömmlichen Heckklappen für Kraftfahrzeuge wird es zunehmend als nachteilig empfunden, dass zum Laden von überlangen, flachen Ladegütern, wie beispielsweise Brettern, Rohren, Biertischen, Bänken, Leitern, Gipskartonplatten, Möbelstücken oder dergleichen, die gesamte Heckklappe nach oben hoch geschwenkt werden muss, um diese wiederum nach dem Beladen beispielsweise mit Schnüren, Gurten oder anderen Verzurrmitteln so gut als möglich im teilgeschlossenen Zustand nach unten fest zu halten. Dabei kommt jedoch die Unterkante der Heckklappe, die im regelrecht geschlossenen Zustand der unteren Ladekante benachbart ist und mit dieser abschließt, zwangsweise auf dem Ladegut zu liegen. Dies führt jedoch nachteilig dazu, dass Abgase durch die teilweise offene Heckklappe in den Font einströmen können. Daraus resultieren nicht nur eine Geruchsbelästigung des Fahrers, sondern es kann unter Umständen zu einer gesundheitlichen Gefährdung kommen. Schließlich ist es von Nachteil, dass die auf der obersten Lage der geladenen überlangen Güter aufliegende Unterkante der Heckklappe deren oberste Schicht häufig nachhaltig beschädigt.

Dementsprechend ist es Aufgabe der vorliegenden Erfindung, eine herkömmliche Kraftfahrzeugheckklappe der vorgenannten Gattung derart zu verbessern, dass eine Freigabe einer separaten Ladeöffnung im unteren Heckklappenbereich für beispielsweise überlanges, flaches Ladegut ermöglicht wird, ohne hierfür die gesamte Heckklappe öffnen zu müssen.

Diese Aufgabe wird gelöst durch die Merkmale des Anspruchs 1.

Dabei wird eine Heckklappe für ein Kraftfahrzeug mit einem an der Kraftfahrzeugstruktur anlenkbaren Heckklappenrahmen sowie einem daran gelagerten Heckklappenelement vorgeschlagen, bei der das Heckklappenelement erstmals einen zumindest abschnittsweise näherungsweise aufrecht orientierter, zur unteren Ladekante benachbarter Heckklappenabschnitt aufweist, wobei das Heckklappenelement von wenigstens einem Heckklappenrahmenabschnitt, vorzugsweise um eine im Wesentlichen quer zur Fahrzeuglängsrichtung orientierte Achse, verschwenkbar gehalten ist, wobei ein Antrieb zum Öffnen und Schließen der Heckklappe vorgesehen ist.

Auf diese Weise kann erstmals in vorteilhafter Weise ein separater Bereich der Heckklappe unabhängig von der gesamten Heckklappe derart geöffnet werden, dass eine separate Ladeöffnung im unteren Heckklappenbereich frei gegeben werden kann. Durch diese separate Laderaumöffnung im unteren Heckklappenbereich kann dann überlanges, flaches Ladegut, wie beispielsweise Bretter, Rohre, Leitern oder dergleichen in den Laderaum des Kraftfahrzeugs geladen werden, ohne hierfür extra die gesamte Heckklappe öffnen zu müssen.

Darüber hinaus bietet dies den wesentlichen Vorteil, dass der näherungsweise aufrecht orientierte, verschwenkbar gelagerte Heckklappenabschnitt nach Abschluss des Beladevorgangs wiederum soweit nach unten verschwenkt werden kann, dass dieser gerade auf der obersten Schicht des Ladeguts sauber aufsitzt. Dadurch, dass dieser Heckklappenabschnitt zudem wesentlich leichter ist, als die gesamte Heckklappe, besteht keine nennenswerte Gefahr von Beschädigungen der Ladegüter oder eines Verkratzens deren Oberfläche. Zugleich fällt die bei der so erzeugten separaten Laderaumöffnung verbleibende offene restliche Querschnittsfläche relativ klein aus, so dass auch die Gefahr reduziert ist, dass Abgase an dem geladenen Ladegut vorbei in den Innenraum des Kraftfahrzeuges strömen können.

Schließlich verbessert sich auch die Aerodynamik eines derart beladenen Fahrzeugs zumindest in geringem Umfang, da keine nach oben offen stehende Heckklappe zu befürchten ist. Nicht zuletzt kann dadurch, dass die Heckklappe als solche verschlossen bleiben kann, trotz in Abhängigkeit von der Ladegutmenge teilweise geöffnetem Heckklappenelement eine gute Sichtbarkeit der dritten Bremsleuchte an der Dachunterkante des Fahrzeugs gewährleistet werden, so dass auch diesbezüglich keinerlei Gefährdung des nachfolgenden Verkehrs zu befürchten ist.

Vorteilhafte Weiterbildungen der Erfindung ergeben sich aus den Merkmalen der Unteransprüche.

Zur Abstützung der Heckklappe gegen ein ungewolltes Verschließen können Federspeicher-/Dämpferelemente oder dergleichen vorgesehen sein. Darüber hinaus kann für ein leichteres Öffnen ein weiterer Federspeicher vorgesehen sein. Alternativ kann daran gedacht werden, das Öffnen der Heckklappe durch elektrische Antriebselemente oder dergleichen hydraulische oder sonstige Antriebe zu unterstützen.

Der Heckklappenrahmen reicht beispielsweise mit dessen unterem Ende bis zur Laderaumkante und schließt gegen diese im geschlossenen Zustand der Heckklappe dicht ab. Auf diese Weise ist der hintere Rahmenabschnitt quasi U-förmig ausgebildet..

Je nach Ausführungsform ist die vorstehend diskutierte Heckklappe beispielsweise als Fließheckfahrzeug-Heckklappe, als Stufenheck-Heckklappe, als Schrägheckfahrzeug-Heckklappe oder als gewöhnlicher Kofferraumdeckel ausgebildet. Der Heckklappenrahmen kann je nach Ausführungsform eine daran befestigte Heckscheibe aufweisen. Die Heckscheibe kann je nach Bedarf eine fest am Heckklappenrahmen verklebte Heckscheibe oder eine mittels Scharnieren angelenkte, nach oben aufklappbare Heckscheibe sein.

Dementsprechend ist je nach Ausführungsform die in Fahrtrichtung vordere Kante der Heckklappe entweder an der oberen Dachkante bzw. an der dortigen Fahrzeugstruktur oder an der hinteren Unterkante des Heckfensters bzw. der dortigen Fahrzeugstruktur nach oben verschwenkbar angelenkt. Die Anlenkung kann, wie vorstehend bereits angesprochen, beispielsweise mittels Scharnieren oder dergleichen Elemente erfolgen. Je nach Ausführungsform der Heckklappe, sei es als gewöhnlicher Kofferraumdeckel oder als besonders große und schwere Heckklappe einer Großraumlimousine, kann deren Öffnen und Schließen beispielsweise mittels Federspeicher oder dergleichen Kraftelemente unterstützt werden. Deren Öffnen und Schließen kann je nach Ausführungsform auch mittels weiterer Antriebe beispielsweise elektrisch, pneumatisch, hydraulisch oder mechanisch unterstützt erfolgen.

Darüber hinaus sind Mischformen der vorstehend diskutierten Varianten denkbar.

Die vorstehend diskutierte Erfindung wird nachfolgend in Ausführungsbeispielen anhand der Figuren der Zeichnung näher erläutert. Es zeigt:

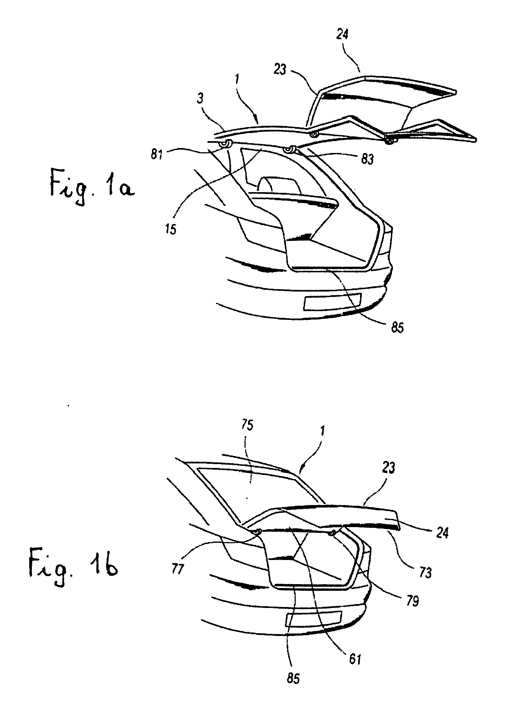

Fig. 1 eine Ausführungsform einer beispielhaften Heckklappe mit einem verschwenkbar angelenkten hinteren unteren Heckklappenelement.

Fig. 1 zeigt eine beispielhafte Ausführungsform einer Heckklappe 1. Die Kraftfahrzeugheckklappe 1 weist einen an der hier nicht näher dargestellten Kraftfahrzeugstruktur anlenkbaren Heckklappenrahmen 3 auf. Das Heckklappenelement 23 ist unterhalb der Heckscheibe 75 im Bereich der Windabrisskante 61 um eine quer zur Fahrzeuglängsrichtung orientierten Achse verschwenkbar angelenkt. Die Anlenkung erfolgt beispielsweise mittels der in Figur 1b) dargestellten Scharniere 77 bzw. 79. Des weiteren erfolgt die Anlenkung der Heckklappe 1 im Bereich des oberen Rahmenabschnittes 15 gegen die Fahrzeugstruktur mittels der dort in Figur 1a) ersichtlichen Scharniere 81 bzw. 83. Dabei können bei einer entsprechenden Ausführungsform die Scharniere 81 bzw. 83 beispielsweise über hydraulische oder elektromechanische Antriebe angesteuert sein, so dass sich die Heckklappe 1 vollautomatisch öffnen und schließen lässt.

Es ist ebenso denkbar, dass die Heckklappe 1 manuell, teilautomatisch oder vollautomatisch geöffnet oder geschlossen wird. Analoges gilt für das Heckklappenelement 23. Im geschlossenen Zustand ist die untere Hinterkante 73 des Heckklappenelements 23 der unteren Laderaumkante 85 benachbart.

Die vorstehend diskutierte Erfindung schafft damit erstmals eine Heckklappe für ein Kraftfahrzeug mit einem an der Kraftfahrzeugstruktur anlenkbaren Heckklappenrahmen sowie einem daran gelagerten Heckklappenelement. Das Heckklappenelement weist einen zumindest abschnittsweise näherungsweise aufrecht orientierten, zur unteren Ladekante benachbarten Heckklappenabschnitt der Kraftfahrzeugheckklappe auf, wobei das Heckklappenelement von wenigstens einem Heckklappenrahmenabschnitt, vorzugsweise im Wesentlichen in aufrechter Richtung verschwenkbar gehalten ist.

### Bezugszeichenliste

- 1: Heckklappe
- 3: Heckklappenrahmen
- 15: Heckklappenrahmenabschnitt
- 23: Heckklappenelement
- 24: Heckklappenabschnitt
- 61: Vorderkante
- 73: Heckklappenunterkante
- 75: Heckscheibe
- 77: Scharnier
- 79: Scharnier
- 81: Scharnier
- 83: Scharnier
- 85: Laderaumkante

## Patentansprüche

**1.** Heckklappe (1) für ein Kraftfahrzeug mit einem an der Kraftfahrzeugstruktur anlenkbaren Heckklappenrahmen (3) sowie einem daran gelagerten Heckklappenelement, wobei das Heckklappenelement (23) einen zumindest abschnittsweise näherungsweise aufrecht orientierten, zur unteren Ladekante (85) benachbarten Heckklappenabschnitt (24) aufweist, wobei das Heckklappenelement (23) von wenigstens einem Heckklappenrahmenabschnitt (7, 9, 11, 13, 17) verschwenkbar gehalten ist, und mit einem Antrieb zum Öffnen und Schließen der Heckklappe.

**3.** Heckklappe (1) nach einem der vorherigen Ansprüche, bei der ein elektrischer, hydraulischer, pneumatischer oder mechanischer Antrieb vorgesehen ist.

**4.** Heckklappe (1) nach einem der vorherigen Ansprüche, die sich halb- oder vollautomatisch öffnen und schließen lässt.

**5.** Heckklappe (1) nach einem der vorherigen Ansprüche, bei der sich das Heckklappenelement (23) halb- oder vollautomatisch öffnen und schließen lässt.

**6.** Heckklappe (1) nach einem der vorherigen Ansprüche, ausgebildet als Fließheckfahrzeug-Heckklappe.

**7.** Heckklappe (1) nach einem der vorherigen Ansprüche, ausgebildet als Stufenheckfahrzeug-Heckklappe.

**8.** Heckklappe (1) nach einem der vorherigen Ansprüche, ausgebildet als Kofferraumdeckel.

**9.** Heckklappe (1) nach einem der vorherigen Ansprüche, aufweisend eine am Heckklappenrahmen (3) befestigte Heckscheibe (75).
